# EUROPEAN PATENT SPECIFICATION

(11) **EP 3 305 627 B1**
(45) Date of publication and mention of the grant of the patent: **15.05.2019**
(21) Application number: 17194527.2
(22) Date of filing: 03.10.2017
(51) Int. Cl.: B62D 13/04

(54) **STEERING AXLE FOR A TRAILER TOWED BY A TRACTOR**
LENKACHSE FÜR EINEN VON EINEM TRAKTOR GEZOGENEN ANHÄNGER
ESSIEU DE DIRECTION POUR UNE REMORQUE TRACTÉE PAR UN VÉHICULE TRACTEUR

(30) Priority: 06.10.2016 IT 201600100377
(43) Date of publication of application: 11.04.2018
(73) Proprietor: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(56) References cited:
- EP-A1- 1 985 526
- EP-A1- 2 272 736
- EP-A1- 3 061 672
- WO-A1-2010/041927

## Description

The present invention relates to a steering axle for a trailer towed by a tractor.

As is known, current steering axles for trailers that are towed by a tractor normally comprise a steering device adapted to control the articulated arms of the steering axle which in turn determine the partial rotation of the hubs and therefore of the wheels of the trailer.

According to the user's requirements different steering devices are made in order to be able to achieve different functions.

For example, a first steering device of current steering axles is made so as to be able to have only two mutually combined functions: performing the active steering function or the locked steering function.

To have the combination of two different functions, such as for example, performing the active steering function or the self steering function of the trailer, it is necessary to use a second steering device that is different from the first one, both structurally and functionally.

To obtain, for example, the self steering function or the locked steering function, it is necessary to use a different steering device from the first two.

In substance, the considerable problem posed both to the axle and trailer manufacturers and to the user thereof lies in the fact that, according to requirements, an axle must be made with a particular steering device.

This situation means that the trailer manufacturer needs to purchase different axles of different types in order to satisfy the customer's requests and, for the axle manufacturer, having to have different types of axles in stock in order to satisfy market requirements.

These drawbacks imply an increase in production and storage costs as well as spare parts and after-sales service. WO2010/041927, EP2272736, EP3061672 and EP1985526 disclose a steering axle for a trailer towed by a tractor according to the preamble of claim 1.

The task of the present invention is to eliminate the above-mentioned drawbacks of the prior art.

Within the context of this task it is an object of the invention to provide a steering axle for a trailer towed by a tractor that allows the three fundamental steering functions of active steering, locked steering and self steering to be performed.

It is a further object to provide a steering axle for a trailer towed by a tractor that, while performing the three fundamental steering functions of active steering or locked steering or self steering, has extremely contained dimensions and a weight that does not affect the functional and technical characteristics of the trailer.

It is yet another object of the invention to provide a steering axle for a trailer towed by a tractor that fulfils the requirements of the market and of the axle manufacturer without having to have different types of axles and components thereof in stock.

It is yet another object of the invention to provide a steering axle for a trailer towed by a tractor that has the three main steering functions without an increase in production and storage costs or spare parts and after-sales service.

This task, as well as these and other aims, are attained by a steering axle 1 for a trailer towed by a tractor, comprising a steering device 2 adapted to control articulated arms 3 of the steering axle 1 , comprising a steering device 2 adapted to control articulated arms 3 of the steering axle 1, said steering device 2 comprising control means 4 for controlling said articulated arms 3 and selection means 5 for activating, through said control means, an active steering function or a locked steering function or a self steering function of said trailer, said steering device 2 further comprising a first cylinder 11 having a first stem 10 having a first 18, a second 19 and a third 15 cylindrical section, the translation of said first stem 10 causing through said articulated arms 3 the variation of the steering angle of said trailer, said first and second cylindrical sections 18,19 having a first and second piston 16,17 respectively, keyed onto them in abutment against said third cylindrical section 15, characterised in that said first and second piston 16,17 are slidable within a second and third cylinder 12 and 13, respectively, integrally associated with a central body 14 that delimits in said second and third cylinders 12 and 13 a first and a second volume 23, 24 closed at the ends of said first and second head 7a and 7b, respectively.

The dependent claims specify more clearly that the steering device 2 comprises the first and the second cylindrical sections 18 and 19 have equal diameters but smaller than the diameter of said third cylindrical section 15.

The central body delimits in said first cylinder a third and fourth volume 26, 27 and the third section 15 is slidable inside said central body 14.

The selection means 5 comprises a first and a second mouth P1 and P4 communicating on one side with an energy source and on the other with said first and second volume 23, 24 and a third and fourth mouth P2 and P3 communicating on one side with said energy source and on the other with said third and fourth volume 26, 27.

When said energy source is not connected simultaneously to said mouths P1, P2, P3 and P4 only said self steering function of said trailer is activated, when said energy source is connected simultaneously to said mouths P3 and P4 only said active steering function of said trailer is activated with left steering, when said energy source is connected simultaneously to said mouths P1 and P2 only said active steering function of said trailer is activated with right steering, when said energy source is connected simultaneously to said mouths P1 and P3, or P2 and P4 only said locked steering function of said trailer is activated. The first, second and third cylinder and said first stem and said central body are coaxial to one another.

When only said active steering function of said trailer is activated with right steering said first piston is in abutment against said central body which is in turn in abutment with a second head 40b of said first cylinder, when said energy source is connected simultaneously to said mouths P1 and P3 said first piston is in abutment against said central body in turn in abutment against said first head 40a of said first cylinder and when said energy source is connected simultaneously to said mouths P2 and P4 said second piston is in abutment against said central body in turn in abutment against said second head 40b of said first cylinder.

These characteristics and advantages of the invention shall appear more clearly from the following indicative and non-limiting description of preferred but not exclusive embodiments of a steering axle for a trailer towed by a tractor illustrated in the following figures in which:

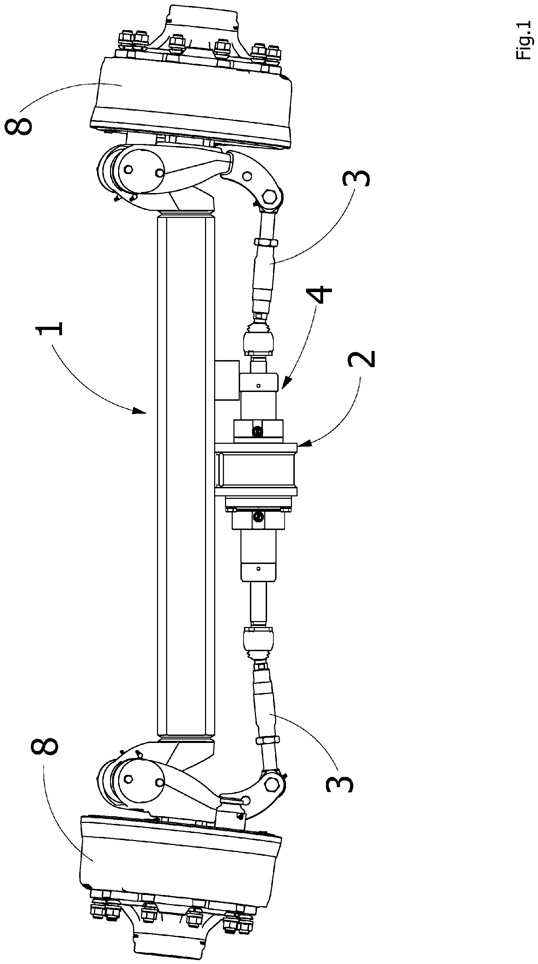

Fig. 1 is an overall view of the steering axle for a trailer towed by a tractor according to the invention;
Fig. 2 is a sectional and detailed view of the inactive steering axle for a trailer towed by a tractor according to the invention;
Fig.3 is a sectional and detailed view of the steering axle on the left for a trailer towed by a tractor according to the invention;
Fig.4 is a sectional and detailed view of the steering axle on the right for a trailer towed by a tractor according to the invention;
Fig.5 is a sectional and detailed view of a first variant of the locking of the steering axle for a trailer towed by a tractor according to the invention; and
Fig.6 is a sectional and detailed view of a second variant of the locking of the steering axle for a trailer towed by a tractor according to the invention.

With particular reference to the figures described above, the steering axle for a trailer towed by a tractor, not shown, is indicated overall with reference numeral 1.

The steering axle 1 comprises a steering device, indicated overall with reference numeral 2, adapted to control the articulated arms 3 that give rise to the steering of the wheels, not shown, mounted on the hubs 8 of the steering axle.

The steering device 2 comprises control means, generally indicated with reference numeral 4, for controlling the articulated arms 3 and selection means, indicated overall with reference numeral 5, for activating selectively according to requirements, through the control means 4, the active steering function or the locked steering function or the self steering function of the trailer.

The control means 4 comprises a first cylinder 11 equipped at its ends with a first and second head 40a and 40b.

The first cylinder coaxially contains a first stem, indicated overall with reference numeral 10, having a first cylindrical section 18, a second cylindrical section 19 and a third cylindrical section 15 coaxial to one another.

The first and the second cylindrical sections 18 and 19 have equal diameters but smaller than the diameter of said third cylindrical section 15.

In particular, the first and second cylindrical sections 18 and 19, respectively, have a first and second piston 16 and 17 respectively keyed onto them in abutment against the third cylindrical section 15.

The first and the second piston 16 and 17 are respectively slidable within a second and third cylinder 12 and 13 integrally associated with a central body 14 coaxial thereto.

The central body 14 delimits in the second and third cylinder 12 and 13, a first and second volume 23 and 24 which, appropriately, are closed at the ends by a first and a second head 7a and 7b, respectively.

Therefore, the first stem protrudes from the first and second head 7a and 7b which are in turn external to the first and second head 40a and 40b of the first cylinder.

Furthermore, the central body delimits in the first cylinder 11 a third and fourth volume 26 and 27.

The third section 15 of the first stem 10 is slidable within the central body 14.

The selection means 5 comprises a first and a second mouth P1 and P4 communicating on one side with an energy source, which may be a pressurised fluid, and on the other with the first and second volume 23 and 24 of the second and third cylinder.

The selection means 5 also comprises a third and fourth mouth P2 and P3 communicating on one side with the same energy source as the first and second mouth and on the other with the third and fourth volume 26 and 27.

Advantageously, when the energy source is not connected simultaneously to the mouths P1, P2, P3 and P4 only the self steering function of the trailer is activated.

Otherwise, when the energy source is connected simultaneously to the mouths P3 and P4 only the active steering function of the trailer is activated which, therefore, performs left steering.

To make the trailer perform right steering the energy source is connected simultaneously to the mouths P1 and P2.

Instead, when the energy source is connected simultaneously to the mouths P1 and P3 or P2 and P4 the locked steering function of the trailer is activated.

In detail, there are the following positions of the various elements listed above.

When only the self steering function of the trailer is activated, the third section 15 translates freely in the central body 14 which, in turn, translates freely in the first cylinder 11.

When only the active steering function of the trailer is activated with the left steering thereof, the second piston 17 is in abutment against the central body 14 which is in turn in abutment with the first head 40a of the first cylinder.

When only the active steering function of the trailer is activated with the right steering thereof, the first piston 16 is in abutment against the central body 14 which is in turn in abutment with the second head 40b of the first cylinder.

When the energy source is connected simultaneously to the mouths P1 and P3 the first piston 16 is in abutment against the central body in turn in abutment against the first head 40a whereas when the energy source is connected simultaneously to the mouths P2 and P4 the second piston 17 is in abutment against the central body in turn in abutment against the second head 40b of the first cylinder.

In light of the above, reported from a structural point of view, it is possible to highlight the operation of the steering axle 1.

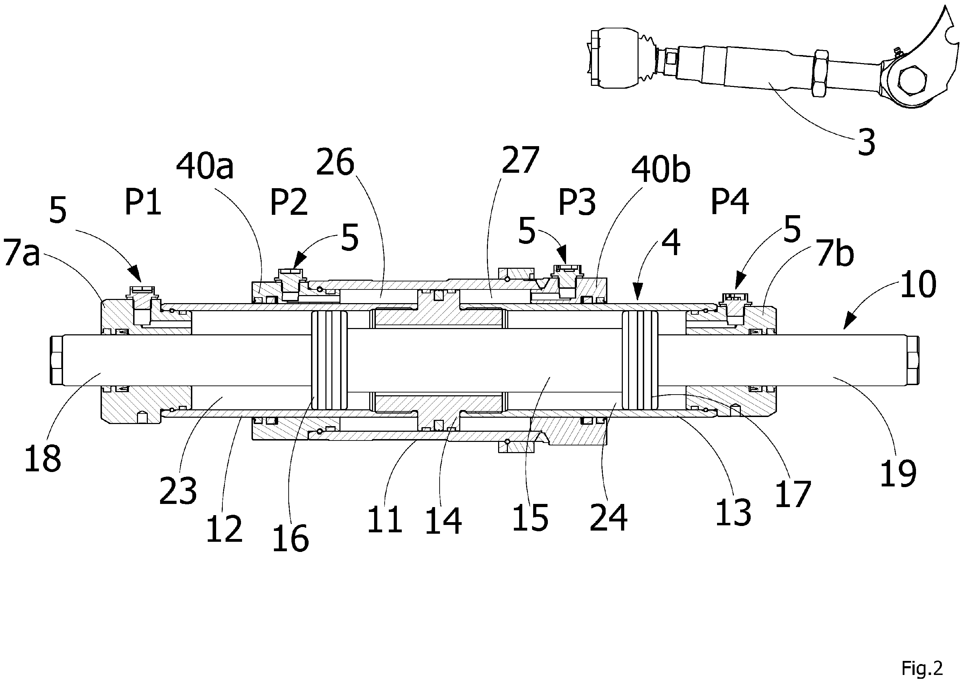

Figure 2 represents the inactive cylinder with self steering function. In this condition the fluid circulates freely in all the parts of the first, second and third cylinder and the steering axle can freely follow the trajectory that the tractor imposes on the trailer.

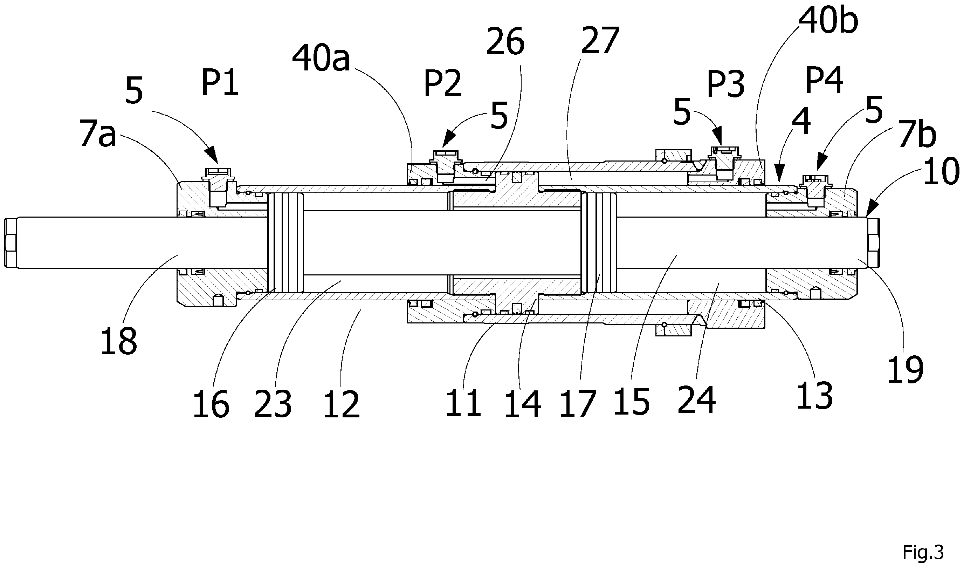

Figure 3 shows the cylinder that activates the steering of the vehicle to the left.

The mouths P3 and P4 respectively supply the chambers 27 and 24.

The fluid introduced by the mouth P4 acts on the piston 17 and pushes the stem to the left, the stem 10 translates, sliding inside the body 14.

The fluid supplied to the chamber 27 of the cylinder 1 through the mouth P3 makes the central body 4 slide inside the cylinder 1.

The result is the movement of the stem 19 that pushes on the left steering arm 3 and the stem 18 that pulls the right steering arm 3.

Thus the left steering of the vehicle is performed.

The steering angle is a function of the volume of fluid introduced through the mouths P3 and P4.

To perform this movement, it is necessary that both the mouths P3 and P4 are supplied simultaneously by the same energy source and that the thrust section of the piston 17 and of the central body 4 are identical.

Only in this way can direct proportionality be ensured between the volume of fluid supplied and the movement of the stem to which the steering angle corresponds.

The fluid present in the chambers 26 and 23 is drained through the mouths P1 and P2 and flows back into the system tank.

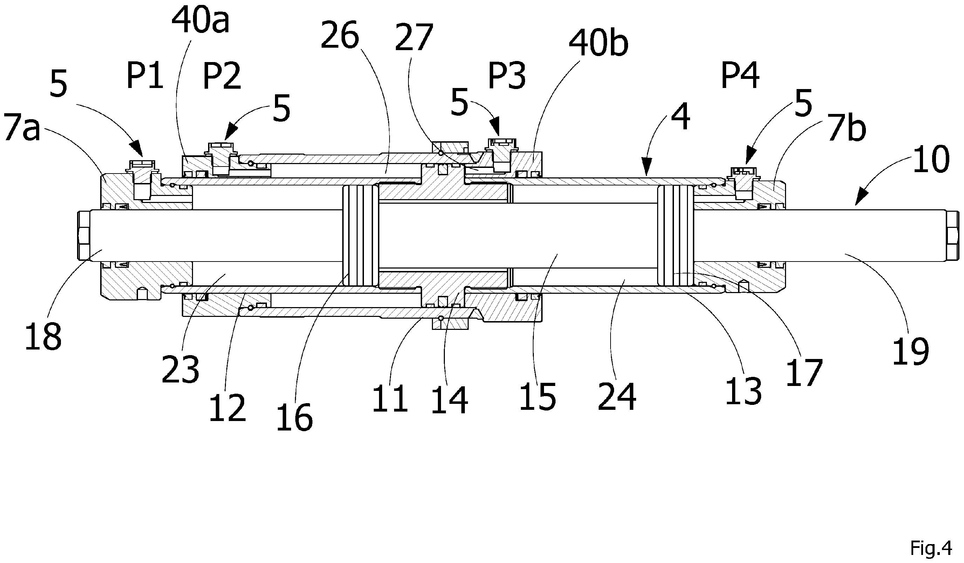

Figure 4 shows, symmetrically to figure 2, the cylinder that activates the steering of the vehicle to the right.

The mouths P1 and P2 respectively supply the chambers 23 and 26.

The draining takes place through the mouths P3 and P4.

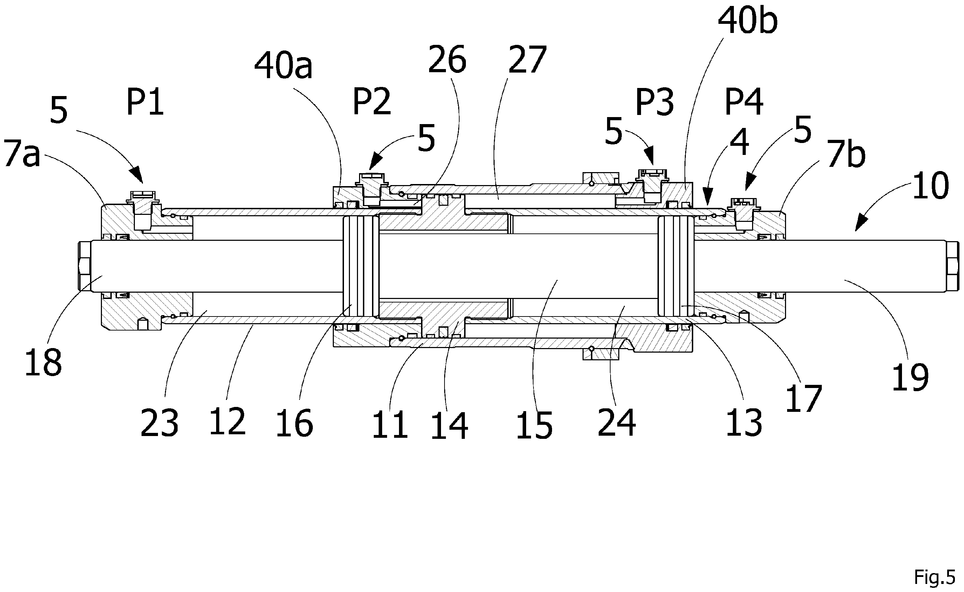

Figure 5 shows the cylinder in one of the two possible locked steering configurations.

The mouths P1 and P3 respectively supply the chambers 23 and 27.

The fluid introduced by the mouth P1 acts on the piston 16 and pushes the stem to the right, the stem 5 translates, sliding inside the body 4, until the piston 16 is in abutment against the central body 4.

The fluid supplied to the chamber 27 of the cylinder 1 through the mouth P3 makes the central body 4 slide inside the cylinder 1 until it is in abutment against the head 40a of the cylinder 1.

The combination of the movements listed above brings the stem 10 into a central position with respect to the cylinder 1 and therefore the two ends of the stem itself are equidistant from the halfway line of the cylinder and ensure the locking position of the steering with the wheels rectilinear and parallel to the normal to the axle body and therefore parallel to the longitudinal axis of the vehicle.

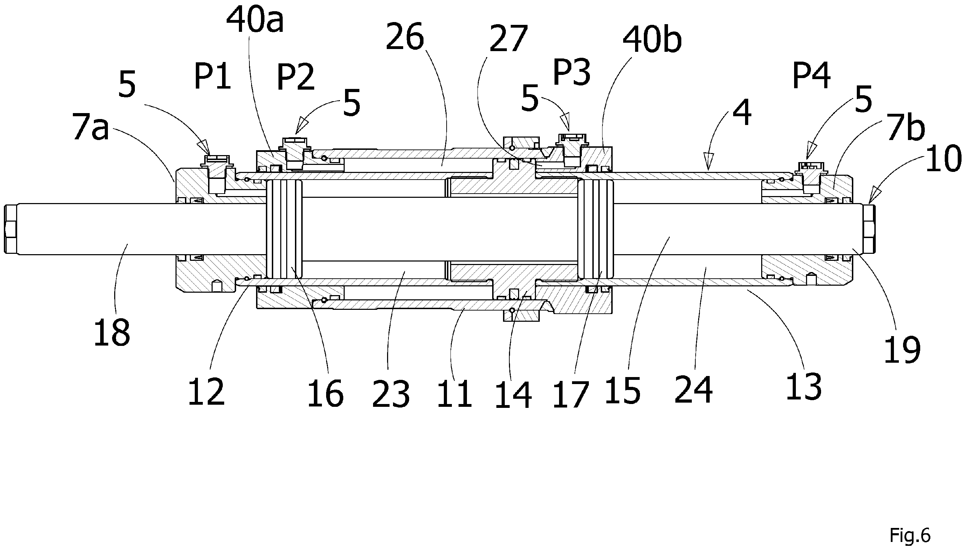

Figure 6 shows the cylinder in a second possible locked steering configuration. The supply takes place through the mouths P2 and P4. The operation is symmetrical with respect to what has been described for Figure 5.

The steering axle 1 for a trailer towed by a tractor as it is conceived is susceptible to numerous modifications and variants, all falling within the scope of the invention as defined by the appended claims.

## Claims

1. Steering axle (1) for a trailer towed by a tractor, comprising a steering device (2) adapted to control articulated arms (3) of the steering axle (1), said steering device (2) comprising control means (4) for controlling said articulated arms (3) and selection means (5) for activating, through said control means, an active steering function or a locked steering function or a self steering function of said trailer, said steering device (2) further comprising a first cylinder (11) having a first stem (10) having a first (18), a second (19) and a third (15) cylindrical section, the translation of said first stem (10) causing through said articulated arms (3) the variation of the steering angle of said trailer, said first and second cylindrical sections (18, 19) having a first and second piston (16,17) respectively, keyed onto them in abutment against said third cylindrical section (15), **characterised in that** said first and second piston (16, 17) are slidable within a second and third cylinder (12) and (13), respectively, integrally associated with a central body (14) that delimits in said second and third cylinders (12) and (13) a first and a second volume (23, 24) closed at the ends of said first and second head (7a) and (7b), respectively.

2. The steering axle according to claim 1, **characterised in that** said first and second cylindrical sections (18) and (19) have equal diameters but smaller than the diameter of said third cylindrical section (15).

3. The steering axle according to claim 1, **characterised in that** said central body delimits in said first cylinder a third and fourth volume (26, 27).

4. The steering axle according to claim 1, **characterised in that** said third section (15) is slidable within said central body (14).

5. The steering axle according to claim 1, **characterised in that** said selection means 5 comprise a first and a second mouth (P1) and (P4) communicating on one side with an energy source and on the other with said first and second volume (23, 24) and a third and fourth mouth (P2) and (P3) communicating on one side with said source of energy and on the other with said third and fourth volume (26, 27).

6. The steering axle according to claim 5, **characterised in that** when said energy source is not connected simultaneously to said mouths (P1, P2, P3) and (P4) only said self steering function of said trailer is activated.

7. The steering axle according to claim 5, **characterised in that** when said energy source is connected simultaneously to said mouths (P3) and (P4) only said active steering function of said trailer is activated with left steering.

8. The steering axle according to claim 5, **characterised in that** when said energy source is connected simultaneously to said mouths (P1) and (P2), only said active steering function of said trailer is activated with right steering.

9. The steering axle according to claim 5, **characterised in that** when said energy source is connected simultaneously to said mouths (P1) and (P3) or (P2) and (P4) only said locked steering function of said trailer is activated.

10. The steering axle according to one or more of the preceding claims, **characterised in that** said first, second and third cylinder and said first stem and said central body are coaxial to one another.

11. The steering axle according to one or more of the preceding claims, **characterised in that** when only said self steering function of said trailer is activated said third section translates freely in said central body in turn translating freely in said first cylinder.

12. The steering axle according to one or more of the preceding claims, **characterised in that** when only said active steering function of said trailer is activated with left steering said second piston is in abutment against said central body which in turn is in abutment with a first head (40a) of said first cylinder.

13. The steering axle according to claim 1, **characterised in that** when only said active steering function of said trailer is activated with right steering said first piston is in abutment against said central body which in turn is in abutment with a second head (40b) of said first cylinder.

14. The steering axle according to claims 5 to 13, **characterised in that** when said energy source is connected simultaneously to said mouths (P1) and (P3) said first piston is in abutment against said central body in turn in abutment against said first head (40a) of said first cylinder.

15. The axle according to claims 5 to 14, **characterised in that** when said energy source is connected simultaneously to said mouths (P2) and (P4) said second piston is in abutment against said central body in turn in abutment against said second head (40b) of said first cylinder.

## Patentansprüche

1. Lenkachse (1) für einen von einem Traktor gezogenen Anhänger, umfassend eine Lenkvorrichtung (2), die ausgelegt ist, um
Gelenkarme (3) der Lenkachse (1) zu steuern, wobei die Lenkvorrichtung (2) Steuermittel (4) umfasst, um die Gelenkarme (3) zu steuern, und Auswahlmittel (5), um mittels der Steuermittel eine aktive Lenkfunktion oder eine gesperrte Lenkfunktion oder eine Selbstlenkfunktion des Anhängers zu aktivieren, wobei die Lenkvorrichtung (2) zudem einen ersten Zylinder (11) umfasst, aufweisend einen ersten Schaft (10), aufweisend einen ersten (18), einen zweiten (19) und einen dritten (15) zylindrischen Abschnitt, wobei die Verschiebung des ersten Schafts (10) durch die Gelenkarme (3) die Veränderung des Lenkwinkels des Anhängers bewirkt, wobei der erste und der zweite zylindrische Abschnitt (18, 19) einen ersten und einen zweiten Kolben (16, 17) aufweisen, jeweils
auf diesen aufgekeilt, anschlagend gegen den dritten zylindrischen Abschnitt (15), **dadurch gekennzeichnet, dass** der erste und der zweite Kolben (16, 17) jeweils in einem zweiten und einem dritten Zylinder (12) und (13) verschiebbar sind, fest assoziiert mit einem mittleren Körper (14), der im zweiten und dritten Zylinder (12) und 13) ein erstes und ein zweites Volumen (23, 24) begrenzt, geschlossen jeweils an den Enden des ersten und zweiten Kopfs (7a) und (7b).

2. Lenkachse nach Anspruch 1, **dadurch gekennzeichnet, dass** der erste und der zweite zylindrische Abschnitt (18) und 19) gleiche Durchmesser aufweisen, die jedoch kleiner als der Durchmesser des dritten zylindrischen Abschnitts (15) sind.

3. Lenkachse nach Anspruch 1, **dadurch gekennzeichnet, dass** der mittlere Körper im ersten Zylinder ein drittes und ein viertes Volumen (26, 27) begrenzt.

4. Lenkachse nach Anspruch 1, **dadurch gekennzeichnet, dass** der dritte Abschnitt (15) im mittleren Körper (14) verschiebbar ist.

5. Lenkachse nach Anspruch 1, **dadurch gekennzeichnet, dass** die Auswahlmittel (5) eine erste und eine zweite Mündung (P1) und (P4) umfassen, kommunizierend auf einer Seite mit einer Energiequelle und auf der anderen mit dem ersten und dem zweiten Volumen (23, 24), sowie eine dritte und eine vierte Mündung (P2) und (P3), kommunizierend auf einer Seite mit der Energiequelle und auf der anderen mit dem dritten und dem vierten Volumen (26, 27) .

6. Lenkachse nach Anspruch 5, **dadurch gekennzeichnet, dass** nur die Selbstlenkfunktion des Anhängers aktiviert ist, wenn die Energiequelle nicht gleichzeitig mit den Mündungen (P1, P2, P3) und (P4) verbunden ist.

7. Lenkachse nach Anspruch 5, **dadurch gekennzeichnet, dass** nur die aktive Lenkfunktion des Anhängers mit Linkslenkung aktiviert ist, wenn die Energiequelle gleichzeitig mit den Mündungen (P3) und (P4) verbunden ist.

8. Lenkachse nach Anspruch 5, **dadurch gekennzeichnet, dass** nur die aktive Lenkfunktion des Anhängers mit Rechtslenkung aktiviert ist, wenn die Energiequelle gleichzeitig mit den Mündungen (P1) und (P2) verbunden ist.

9. Lenkachse nach Anspruch 5, **dadurch gekennzeichnet, dass** nur die gesperrte Lenkfunktion des Anhängers aktiviert ist, wenn die Energiequelle gleichzeitig mit den Mündungen (P1) und (P3) oder (P2) und (P4) verbunden ist.

10. Lenkachse nach einem oder mehreren der vorhergehenden Ansprüche, **dadurch gekennzeichnet, dass** der erste, der zweite und der dritte Zylinder und der erste Schaft sowie der mittlere Körper koaxial zueinander angeordnet sind.

11. Lenkachse nach einem oder mehreren der vorhergehenden Ansprüche, **dadurch gekennzeichnet, dass** der dritte Abschnitt frei im mittleren Körper verschoben wird, der wiederum frei im ersten Zylinder verschoben wird, wenn nur die Selbstlenkfunktion des Anhängers aktiviert ist.

12. Lenkachse nach einem oder mehreren der vorhergehenden Ansprüche, **dadurch gekennzeichnet, dass** der zweite Kolben gegen den mittleren Körper anschlägt, der wiederum mit einem ersten Kopf (40a) des ersten Zylinders im Anschlag ist, wenn nur die aktive Lenkfunktion des Anhängers mit Linkslenkung aktiviert ist.

13. Lenkachse nach Anspruch 1, **dadurch gekennzeichnet, dass** der erste Kolben gegen den mittleren Körper anschlägt, der wiederum mit einem zweiten Kopf (40b) des ersten Zylinders im Anschlag ist, wenn nur die aktive Lenkfunktion des Anhängers mit Rechtslenkung aktiviert ist.

14. Lenkachse nach Anspruch 5 bis 13, **dadurch gekennzeichnet, dass** der erste Kolben gegen den mittleren Körper anschlägt, der wiederum gegen den ersten Kopf (40b) des ersten Zylinders anschlägt, wenn die Energiequelle gleichzeitig mit den Mündungen (P1) und (P3) verbunden ist.

15. Achse nach Anspruch 5 bis 14, **dadurch gekennzeichnet, dass** der zweite Kolben gegen den mittleren Körper anschlägt, der wiederum gegen den zweiten Kopf (40b) des ersten Zylinders anschlägt, wenn die Energiequelle gleichzeitig mit den Mündungen (P2) und (P4) verbunden ist.

## Revendications

1. Essieu de direction (1) pour remorque tractée par un véhicule tracteur, comprenant un dispositif de direction (2) adapté pour
commander des bras articulés (3) de l'essieu de direction (1), ledit dispositif de direction (2) comprenant des moyens de commande (4) servant à commander lesdits bras articulés (3) et des moyens de sélection (5) destinés à activer, par l'intermédiaire desdits moyens de commande, une fonction de direction active ou une fonction de direction bloquée ou une fonction autodirectrice dudit véhicule tracteur, ledit dispositif de direction (2) comprenant de plus un premier cylindre (11) comportant une première tige (10) comportant une première (18), une seconde (19) et une troisième (15) section cylindrique, la translation de ladite première tige (10) provoquant, à travers lesdits bras articulés (3), la variation de l'angle de direction dudit véhicule tracteur, lesdites première et seconde sections cylindriques (18, 19) comportant un premier et un second piston (16, 17)
respectivement, calés sur celles-ci venant se mettre en butée contre ladite troisième section cylindrique (15), **caractérisé en ce que** lesdits premier et second pistons (16, 17) peuvent coulisser, respectivement, à l'intérieur d'un second et d'un troisième cylindre (12) et (13), associés de façon solidaire à un corps central (14) délimitant, dans lesdits second et troisième cylindres (12) et (13), un premier et un second volume (23, 24) fermés aux extrémités, respectivement, desdites première et seconde têtes (7a) et (7b).

2. Essieu de direction selon la revendication 1, **caractérisé en ce que** lesdites première et seconde sections cylindriques (18) et (19) ont des diamètres équivalents mais inférieurs au diamètre de ladite troisième section cylindrique (15).

3. Essieu de direction selon la revendication 1, **caractérisé en ce que** ledit corps central délimite dans ledit premier cylindre un troisième et un quatrième volume (26, 27).

4. Essieu de direction selon la revendication 1, **caractérisé en ce que** ladite troisième section (15) peut coulisser à l'intérieur dudit corps central (14) .

5. Essieu de direction selon la revendication 1, **caractérisé en ce que** lesdits moyens de sélection comprennent une première et une seconde embouchure (P1) et (P4) communiquant sur un côté avec une source d'énergie et sur l'autre avec lesdits premier et second volumes (23, 24) et une troisième et quatrième embouchure (P2) et (P3) communiquant sur un côté avec ladite source d'énergie et sur l'autre avec lesdits troisième et quatrième volumes (26, 27) .

6. Essieu de direction selon la revendication 5, **caractérisé en ce que** lorsque ladite source d'énergie n'est pas reliée simultanément auxdites embouchures (P1, P2, P3) et (P4), seule ladite fonction autodirectrice dudit véhicule tracteur est activée.

7. Essieu de direction selon la revendication 5, **caractérisé en ce que** lorsque ladite source d'énergie est reliée simultanément auxdites embouchures (P3) et (P4), seule ladite fonction de direction active dudit véhicule tracteur est activée avec un braquage à gauche.

8. Essieu de direction selon la revendication 5, **caractérisé en ce que** lorsque ladite source d'énergie est reliée simultanément auxdites embouchures (P1) et (P2), seule ladite fonction de direction active dudit véhicule tracteur est activée avec un braquage à droite.

9. Essieu de direction selon la revendication 5, **caractérisé en ce que** lorsque ladite source d'énergie est reliée simultanément auxdites embouchures (P1) et (P3) ou (P2) et (P4), seule ladite fonction de direction bloquée dudit véhicule tracteur est activée.

10. Essieu de direction selon l'une ou plusieurs des revendications précédentes, **caractérisé en ce que** lesdits premier, second et troisième cylindres et ladite première tige et ledit corps central sont coaxiaux réciproquement.

11. Essieu de direction selon l'une ou plusieurs des revendications précédentes, **caractérisé en ce que** lorsque seule ladite fonction autodirectrice dudit véhicule tracteur est activée, ladite troisième section translate librement dans ledit corps central qui à son tour translate librement dans ledit premier cylindre.

12. Essieu de direction selon l'une ou plusieurs des revendications précédentes, **caractérisé en ce que** lorsque seule ladite fonction de direction active dudit véhicule tracteur est activée avec un braquage à gauche, ledit second piston vient se mettre en butée contre ledit corps central qui à son tour vient se mettre en butée contre une première tête (40a) dudit premier cylindre.

13. Essieu de direction selon la revendication 1, **caractérisé en ce que** lorsque seule ladite fonction de direction active dudit véhicule tracteur est activée avec un braquage à droite, ledit premier piston vient se mettre en butée contre ledit corps central qui à son tour vient se mettre en butée contre une seconde tête (40b) dudit premier cylindre.

14. Essieu de direction selon les revendications 5 à 13, **caractérisé en ce que** lorsque ladite source d'énergie est reliée simultanément auxdites embouchures (P1) et (P3), ledit premier piston vient se mettre en butée contre ledit corps central qui à son tour vient se mettre en butée contre ladite première tête (40a) dudit premier cylindre.

15. Essieu de direction selon les revendications 5 à 14, **caractérisé en ce que** lorsque ladite source d'énergie est reliée simultanément auxdites embouchures (P2) et (P4), ledit second piston vient se mettre en butée contre ledit corps central qui à son tour vient se mettre en butée contre ladite seconde tête (40b) dudit premier cylindre.
